# FASCICULE DE BREVET EUROPEEN

(11) **EP 3 201 576 B1**
(45) Date de publication et mention de la délivrance du brevet: **07.08.2024**
(21) Numéro de dépôt: 15763521.0
(22) Date de dépôt: 03.09.2015
(51) Int. Cl.: G01F 1/69, G01F 1/698

(54) **DISPOSITIF DE DÉTECTION DE FLUX D'AIR**
LUFTSTROMERKENNUNGSVORRICHTUNG
AIR FLOW DETECTION DEVICE

(30) Priorité: 01.10.2014 EP 14290296
(43) Date de publication de la demande: 09.08.2017
(73) Titulaire: Siemens Schweiz AG, 8047 Zürich (CH)
(72) Inventeur: CLERIVET, Pierre, 78280 Guyancourt (FR)
(74) Mandataire: Siemens Patent Attorneys
(86) Numéro de dépôt international: PCT/EP2015/070113
(87) Numéro de publication internationale: WO 2016/050443

(56) Documents cités:
- FR-A1- 2 983 950
- GB-A- 2 482 004
- US-A- 3 803 913
- US-A1- 2013 025 364

## Description

La présente invention concerne un dispositif de détection de flux d'air selon la revendication 1.

Il existe des dispositifs divers visant à détecter une présence d'un flux d'air voire afin de mesurer un flux d'air ou de fluide circulant dans une conduite, telle qu'une conduite d'évacuation de fumée/chaleur.

Particulièrement, il est connu qu'il est possible de détecter un flux d'air dans une conduite canalisant le dit flux au moyen d'au moins un capteur de température, par exemple à résistance de type NTC).

Un tel système est décrit par le document FR2983950A1, présentant dans sa partie introductive un dispositif nommé « Débitmètre thermique » de détection de flux d'un fluide dans une conduite (par exemple à l'entrée d'admission d'un appareillage de chauffage), ladite conduite comprenant au moins un premier et un second capteurs de température (à résistance du type NTC) immergés dans le fluide. Un des capteurs est utilisé pour mesurer la température du fluide entrant, l'autre capteur est alimenté par un courant électrique d'intensité connue, de façon à être amené à une température supérieure à celle du fluide à mesurer/détecter. Le même document présente ensuite une solution de positionnement avantageuse des dits capteurs sous une inclinaison donnée par rapport un axe principal de la conduite d'air ou de fluide afin d'éviter que des saletés viennent entraver la détection de flux d'air.

Selon le choix du capteur de température (ou thermo-senseur) alimenté en courant, il s'avère que le dispositif de détection de flux d'air requière une alimentation électrique suffisante, de sorte que la consommation des deux capteurs s'avèrent non négligeable. Le coût de fonctionnement du dispositif de détection de flux d'air est donc tout aussi non négligeable. Ces inconvénients rendent l'utilisation d'un tel dispositif de détection de flux d'air particulièrement mal adapté à un environnement de conduite plus exigeant, tel que dans des systèmes embarqués (train, avion, etc.) voire dans des infrastructures complexes (immeubles, usines,...).

Enfin, pour des raisons sécuritaires, il est majeur que le dispositif de détection de flux d'air comprenant au moins un capteur de température alimenté par un courant électrique de façon à être amené à une température définie (telle que dans le document FR2983950A1) puisse être diagnostiqué si le dit capteur présente des états de vieillissement voire une panne. Ceci s'applique aussi pour le second capteur (tel que dans le document FR2983950A1) utilisé pour mesurer la température du fluide entrant. Ce diagnostic devrait aussi être peu consommateur d'énergie et non coûteux. De ce fait, il serait garanti une meilleure appréciation de la précision de détection de flux d'air, surtout pour des applications sécuritaires (par exemple en rapport à des conduites de ventilation en cas de risque de fumée/feu). GB2482004-A décrit un appareil de surveillance comprenant au moins trois capteurs situés dans un fluide à surveiller. Chaque capteur comprend un dispositif de détection de température et est doté d'une source de courant pour assurer l'auto-échauffement du capteur. Un circuit de comparaison est conçu pour recevoir et comparer des signaux afin de déterminer les caractéristiques du fluide à surveiller et pour émettre un signal de test, indicatif des caractéristiques du fluide à surveiller.

Un but de la présente invention est de proposer un dispositif de détection de flux d'air comprenant une conduite d'air canalisant le flux d'air, ladite conduite comprenant au moins un premier et un second capteurs de température, dont la consommation d'énergie est réduite, tout en garantissant un fonctionnement sécuritaire.

La revendication 1 présente une solution à cet effet. A partir d'un dispositif de détection de flux d'air comprenant une conduite d'air canalisant le flux d'air, ladite conduite (par exemple un tube) comprenant (dans l'enceinte du tube) au moins un premier et un second capteurs de température, le dispositif selon l'invention prévoit que chacun des capteurs soit soumis à des fluctuations périodiques de température contrôlées par au moins un moyen de chauffage, tel qu'une alimentation variable en courant dédiée au dit capteur.

Avantageusement, le capteur de température alimenté ne nécessite plus d'être alimenté en permanence pour amener sa température à un seuil supérieur à celle de l'air dans la conduite (tel que dans l'état de la technique FR2983950A1). Il suffit de prévoir que la température du dit capteur soit montée sous forme d'un pic ou palier de courte durée avant qu'une mesure (ultérieure au pic/palier de température) soit effectuée par un module de mesure de température dudit capteur, indiquant ainsi une présence ou non de flux d'air dans la conduite.

Un ensemble de sous-revendications présente également des avantages de l'invention.

Des exemples de réalisation et d'application sont fournis à l'aide de figures décrites :
- Figure 1: Schéma de base de deux capteurs de températures dans une conduite,
- Figure 2: Schéma de principe de détection de flux d'air selon l'invention,
- Figure 3: Diagramme de fonctionnement du dispositif de détection de flux d'air selon l'invention.

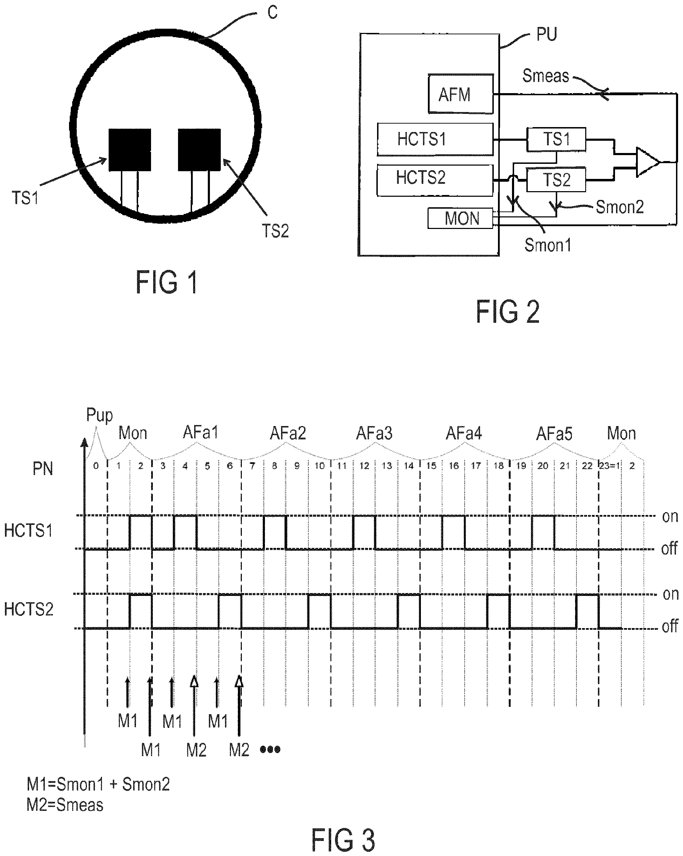

La figure 1 présente un schéma de base de deux capteurs de températures TS1, TS2 disposés dans l'enceinte d'une conduite (C) ici cylindrique (vue en section). Les deux capteurs disposent chacun d'au moins une entrée en alimentation électrique et une sortie de mesure, ces entrées et sorties étant couplées idéalement hors de l'enceinte de la conduite à des composants de contrôle (commande, monitoring) et mesure du dispositif de détection de flux d'air.

La figure 2 présente un schéma de principe du dispositif de détection de flux d'air selon l'invention, afin d'illustrer les fonctions de contrôle (commande, monitoring) et mesure du dit dispositif.

Un premier ensemble de mesure comporte les deux capteurs (TS1, TS2) dont au moins une sortie commune de mesure (Smeas) en température est transmise à un second ensemble (PU) comprenant un module de mesure de température apte à délivrer un signal de détection voire mesure de flux d'air (AFM). Le signal de mesure Smeas est dans cet exemple un signal différentiel (amplifié) entre les deux températures mesurées aux capteurs TS1, TS2. Le même second ensemble (PU) comprend aussi un moyen de monitoring (MON) couplé respectivement à chacune des deux sorties des capteurs lui délivrant ainsi deux signaux de température respectifs Smon1, Smon2, assurant ainsi un contrôle sécuritaire idéalement périodique possible de chacun des capteurs. Enfin, Le second ensemble (PU) comprend aussi au moins un voire deux modules de chauffage (HCTS1, HCTS2) couplés respectivement à chacune des entrées en alimentation électrique (courant) des capteurs (TS1, TS2). Les deux modules de chauffage permettent de générer des fluctuations périodiques de température d'au moins un voire des deux capteurs, idéalement par pic ou palier de courant. La figure 3 représente enfin un exemple possible de diagramme de fonctionnement du dispositif de détection de flux d'air selon l'invention en relation avec les figures 1 et 2.

En abscisse du diagramme, la composante de temps est signifiée, en particulier au travers d'une série modèle de phases successives (PN) dénombrée ici cycliquement entre 0 et 22 phases, puis encore 1 et 22, etc. Les dites phases sont rassemblées sous des sous-groupes successifs (Mon, AFa1, AFa2, AFa3, AFa4, AFa5,...) dont :
- le premier est un cycle (Mon) comprenant des points temporels de monitoring (M1 associé aux signaux Smon1 et Smon2) par mesure des signaux de référence (Smon1, Smon2) et,
- les cinq cycles suivants (AFa1, AFa2, AFa3, AFa4, AFa5,...) sont des cycles de monitoring (M1) (signaux de monitoring) incluant aussi des points temporels de mesure (M2 associé au signal Smeas pour la détection de flux).

Au début (PN=0) d'au moins la première série de mise en fonction du dispositif selon l'invention, la première phase PN=0 correspond à une mise sous-alimentation des capteurs, leur conférant ainsi un courant de référence (aussi faible que possible) de base.

Peu près les deux premières phases PN=0 et 1, une seconde phase active PN=2 est amorcée en configurant les deux moyens de chauffage respectifs HCTS1, HCTS2 sous une alimentation activée (« on ») à durée limitée à la phase PN=2 (environ une minute par exemple), puis vers un rebasculement sur arrêt d'alimentation (« off ») de sorte que les capteurs TS1, TS2 atteignent simultanément une température visée. Une première mesure de monitoring (M1) des signaux Smon1, Smon2 est effectuée dans le cadre d'une première mesure de référence des températures atteintes des capteurs.

En fin de la même phase PN=2, les moyens de chauffage étant désactivés, la température des capteurs devra donc rediminuer selon un profil connu de refroidissement. Une seconde mesure de monitoring (M1) des signaux (Smon1, Smon2) est effectuée dès désactivation des moyens de chauffage, de sorte qu'à ce terme, un second monitoring de référence des températures effectives de capteurs peut être réalisé, dès mise en fonction du dispositif de détection (PN=0, 1, 2).

A partir de la phase PN=3 et sans alerte sécuritaire des monitorings précédents, le premier cycle (sous-groupe AFa1) peut ainsi commencer s'étendant de la phase PN=3 à la phase PN=6.

En début de phase PN=4, un premier des capteurs est soumis à une nouvelle fluctuation (hausse) de température, par activation « on » de son moyen de chauffage respectif parmi un des deux moyens HCTS1, HCTS2. En fin de phase PN=4, une première mesure (M2) du signal (Smeas) est effectuée dans le cadre d'une mesure de référence de température atteinte du premier capteur visé et indiquant si un flux d'air est détecté. En début de la phase suivante PN=5, le moyen de chauffage est désactivé « off » et, en fin de la même phase PN=5, un point de monitoring (M1) est effectué visant à vérifier le bon fonctionnement du premier des capteurs ayant subi une hausse de température.

Enfin en fin de phase PN=5 et en début de phase PN=6, phase finale du premier cycle (sous-groupe AFa1), le second des capteurs est soumis à une nouvelle fluctuation (hausse) de température, par activation « on » de son moyen de chauffage respectif parmi un des deux moyens HCTS1, HCTS2. Une seconde mesure (M2) du signal (Smeas) est effectuée dans le cadre d'une mesure de référence de température atteinte du dit second capteur visé et indiquant si un flux d'air est détecté. En fin de phase PN=6, le moyen de chauffage est désactivé « off » et, en fin de la phase suivante PN=7, un point de monitoring (M1) est effectué visant à vérifier le bon fonctionnement du second des capteurs ayant subi une hausse de température. Les autres cycles (sous-groupe AFa2, AFa3, etc.) succédant au premier cycle (AFa1) précédemment décrit entre les phases PN= 3 et 6, se déroulent selon un mode de commande des moyens de chauffage et de monitoring identique à celui du cycle décrit (AFa1).

L'exemple de diagramme donné en figure 3 est fondé sur deux capteurs et leur moyens de chauffage respectifs, mais une réalisation possible plus simple pourrait ne prévoir qu'un des deux capteurs soumis à des fluctuations périodique de température contrôlées par un unique moyen de chauffage (HCTS1 ou HCTS2). Le mode à deux capteurs et deux moyens de chauffage (du moins chacun des capteurs subit des fluctuations de température par pics ou paliers périodiques de température) est un mode préféré, car il permet de délivrer une détection plus fiable en raison de la redondance des moyens de commande (moyens de chauffage des capteurs) et de mesure de températures (capteurs). Principalement, le dispositif selon l'invention prévoyant que chacun des capteurs sont soumis à des fluctuations de température contrôlées par au moins un moyen de chauffage, est un excellent moyen sécuritaire, et du fait que les capteurs ne nécessitent que périodiquement et ponctuellement une alimentation en courant par pics/paliers, le dispositif est énergétiquement fort économe.

Préférentiellement, il est alors aussi possible de prévoir un dispositif pour lequel au moins un mode de commande du moyen de chauffage est activable afin de générer des fluctuations de température comprenant une montée simultanée en température des deux capteurs (c'est-à-dire sous forme de pics/paliers périodiques de température). L'économie d'énergie n'est ici pas forcément accrue, mais des comparaisons de vieillissement entre capteurs ou de pannes d'un des capteurs peuvent alors plus pointues, dans un but sécuritaire.

Il est cependant clair que la solution selon la figure 3 apporte la meilleure économie énergétique pour un dispositif selon l'invention pour lequel au moins un mode de commande du moyen de chauffage est activable afin de générer des fluctuations de température comprenant des montées temporellement alternées en température des deux capteurs (c'est-à-dire sous forme de pics/paliers périodiques de température). De cette façon, la consommation du dispositif de détection à capteurs activées alternativement correspond à celle d'un dispositif à un seul capteur actif sur une longue durée. Il en ressort aussi que les durées de vie de chacun des deux capteurs sont doublées, sachant qu'ils sont deux fois moins utilisés qu'un capteur unique d'un dispositif à un seul capteur actif.

Idéalement, le dispositif selon l'invention prévoit que les capteurs de température sont auto-chauffants, le dit chauffage étant idéalement obtenu par effet Joule en injectant du courant dans le capteur. Ce moyen de chauffage s'avère particulièrement non onéreux, préférentiellement en utilisant des capteurs thermiques en silicium (TI LM335A ou ST LM335A) qui sont comparables à des diodes Zener ainsi « améliorée ».

Enfin, dans un but de rendre le dispositif selon l'invention encore plus robuste (redondant/sécuritaire), d'augmenter les durées de vie « fiable » des capteurs et/ou afin d'augmenter la fréquence de mesure, le dispositif prévoit que plus de deux capteurs sont présents et peuvent être commandés/contrôlés/inspectés (monitoring) de la même manière que les deux capteurs selon les figures 1 à 3.

## Revendications

1. Dispositif de détection de flux d'air comprenant une conduite d'air (C) canalisant le flux d'air, ladite conduite comprenant au moins un premier et un second capteurs de température (TS1, TS2), pour lequel chacun des capteurs est soumis à des fluctuations de température contrôlées par un moyen de chauffage (HCTS1, HCTS2), et pour lequel au moins un mode de commande du moyen de chauffage est activable afin de générer des fluctuations de température comprenant des montées temporellement alternées en température des deux capteurs activés alternativement **caractérisé en ce que** les capteurs sont activés de façon à ce que, lorsqu'un desdits capteurs est actif, l'autre ne l'est pas.

2. Dispositif selon revendication 1, pour lequel au moins un mode de commande du moyen de chauffage est activable afin de générer des fluctuations de température comprenant une montée simultanée en température des deux capteurs.

3. Dispositif selon une des revendications 1 à 2, pour lequel les capteurs de température sont auto-chauffants.

4. Dispositif selon revendication 3, pour lequel le chauffage de capteur est réalisé par injection de courant.

5. Dispositif selon une des revendications 1 à 4, pour lequel plus de deux capteurs sont présents.

## Patentansprüche

1. Luftstromerkennungsvorrichtung, umfassend eine Luftleitung (C), die den Luftstrom kanalisiert, wobei die Leitung mindestens einen ersten und einen zweiten Temperatursensor (TS1, TS2) umfasst, wobei jeder der Sensoren Temperaturschwankungen ausgesetzt ist, die durch ein Heizmittel (HCTS1, HCTS2) gesteuert werden und wobei mindestens ein Steuermodus des Heizmittels aktivierbar ist, um Temperaturschwankungen zu erzeugen, die zeitlich abwechselnde Temperaturanstiege der beiden abwechselnd aktivierten Sensoren umfassen, **dadurch gekennzeichnet, dass** die Sensoren so aktiviert werden, dass, wenn einer der Sensoren aktiv ist, der andere nicht aktiv ist.

2. Vorrichtung nach Anspruch 1, wobei mindestens ein Steuermodus des Heizmittels aktivierbar ist, um Temperaturschwankungen zu erzeugen, die einen gleichzeitigen Temperaturanstieg der beiden Sensoren umfassen.

3. Vorrichtung nach einem der Ansprüche 1 bis 2, wobei die Temperatursensoren selbsterwärmend sind.

4. Vorrichtung nach Anspruch 3, wobei die Sensorerwärmung durch Stromeinspeisung durchgeführt wird.

5. Vorrichtung nach einem der Ansprüche 1 bis 4, wobei mehr als zwei Sensoren vorhanden sind.

## Claims

1. Device for detecting air flows, comprising an air line (C) channelling the air flow, said line comprising at least one first temperature sensor (TS1) and one second temperature sensor (TS2), wherein each of the sensors is subjected to temperature fluctuations controlled by a heating means (HCTS1, HCTS2), and wherein at least one control mode of the heating means can be activated to generate temperature fluctuations comprising temperature increases in the two sensors that alternate over time, **characterised in that** the sensors are activated such that when one of said sensors is active, the other one is not.

2. Device according to claim 1, wherein at least one control mode of the heating means can be activated to generate temperature fluctuations comprising a simultaneous temperature increase in the two sensors.

3. Device according to one of claims 1 to 2, wherein the temperature sensors are self-heating.

4. Device according to claim 3, wherein the sensor is heated by current injection.

5. Device according to one of claims 1 to 4, wherein there are more than two sensors.
